# EUROPEAN PATENT SPECIFICATION

(11) **EP 0 457 495 B1**
(45) Date of publication and mention of the grant of the patent: **01.02.1995**
(21) Application number: 91304165.3
(22) Date of filing: 09.05.1991
(51) Int. Cl.: B01F 15/02, B65D 88/68, B65D 88/64

(54) **Dough-discharging apparatus**
Vorrichtung zur Abgabe von Teig
Appareil pour déposer la pâte

(30) Priority: 12.05.1990 JP 49763/90
(43) Date of publication of application: 21.11.1991
(73) Proprietor: RHEON AUTOMATIC MACHINERY CO. LTD., Utsunomiya-shi Tochigi-ken (JP)
(72) Inventor: Tashiro, Yasunori, Utsunomiya-shi, Tochigi-ken (JP); Onoguchi, Kazuyoshi, Utsunomiya-shi, Tochigi-ken (JP)
(74) Representative: Leale, Robin George

(56) References cited:
- CH-A- 507 138
- DE-A- 2 616 017
- FR-A- 2 600 314
- GB-A- 620 231
- US-A- 3 419 052
- US-A- 3 804 304
- US-A- 4 167 237
- US-A- 4 645 064

## Description

This invention relates to dough-discharging apparatus, and more particularly to a device for force-feeding plastic dough, stored in a dough hopper, towards a screw, whilst preventing the dough from sticking to the hopper wall.

US-A-4,167,237 discloses a pressure feeder which includes pusher assemblies. This apparatus is intended to feed the dough contained in a hopper towards a screw located in the bottom of the hopper. The dough in the hopper is force-fed towards the screw by pusher members which pivot in the hopper.

US-A-4,645,064 also discloses a screw conveyor arranged to force-feed dough stored in a hopper. A driven roller is provided in the hopper above the screw, and the dough is force-fed downwardly towards the screw as the driven roller is rotated.

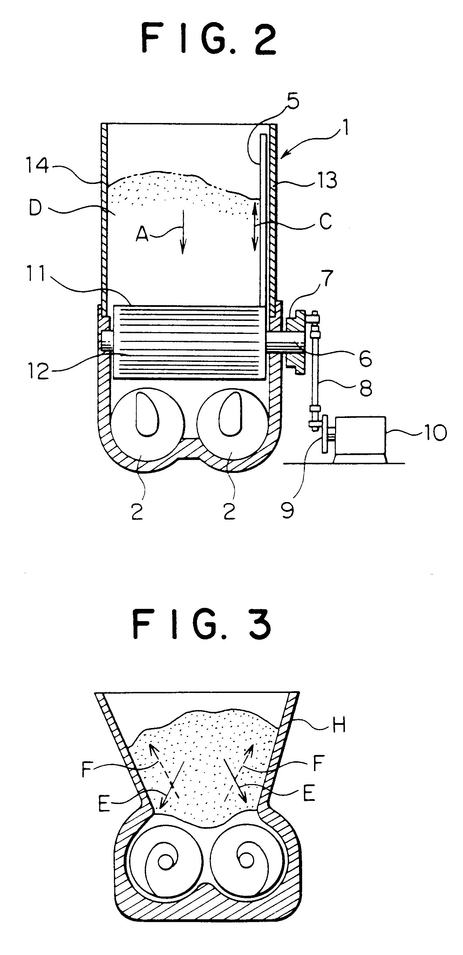

However, in prior art apparatus for discharging dough by using a screw, a dough-bridging phenomenon often occurs in the hopper, since the dough tends to stick to the inner surface of the hopper wall. If such a phenomenon occurs, the dough stays in the hopper and a space is formed between the bottom of the dough and the top of the screw. Such a situation is shown in Fig. 3. In such a situation, the dough cannot be supplied to the screw, and thus the screw cannot perform its dough-discharging function.

Unless an appropriate quantity of dough is supplied to the screw, the dough will not be discharged by the screw. In such circumstances, to realize a stable discharge of dough, an auxiliary operation must be made to feed the dough down towards the screw.

CH-A-507 138 discloses an apparatus for feeding pasty materials such as dough, comprising a hopper, a screw for feeding pasty material provided at the bottom of the hopper, an outlet for discharging pasty material located at the downstream end of the screw, and a rotatably mounted scraper for scraping pasty material from the inside of the hopper. However, a plurality of scrapers arranged at different levels in the conical hopper are necessary to remove all the pasty material.

According to the present invention there is provided such an apparatus for discharging dough, in which the scraper is mounted adjacent a planar side wall of the hopper and is arranged to pivot to and fro adjacent this side wall, the pivotal point being positioned at the lower lateral part of this side wall, the length of the scraper being substantially the same as the height of this side wall and more than half the width of this side wall.

With such an arrangement, the scraper removes dough from the large area of the inside of the hopper, and the dough is reliably supplied to the screw.

An embodiment of the invention will now be described by way of example and with reference to the accompanying drawings, in which:-
Figure 1 is a longitudinal cross-sectional view of an apparatus according to the present invention;
Figure 2 is a lateral cross-sectional view of the apparatus; and
Figure 3 is a lateral cross-sectional view of a prior art apparatus.

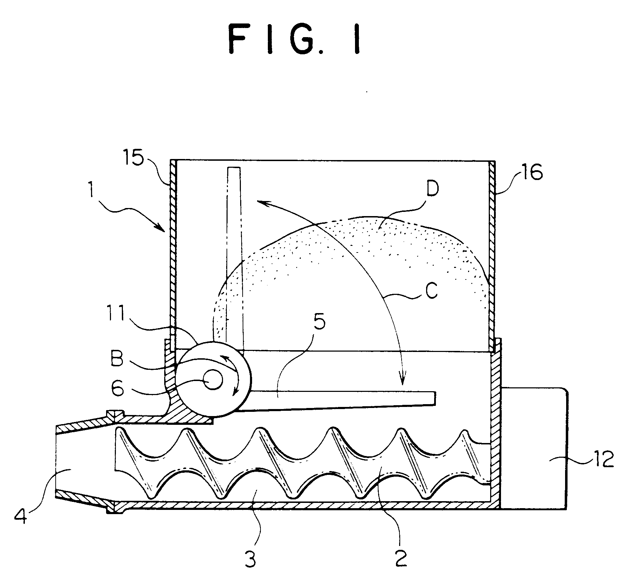

The apparatus of Figures 1 and 2 includes a hopper 1, substantially rectangular in cross-section and having side walls 13 and 14 and end walls 15 and 16. A screw housing 3 is located at the bottom of the hopper and accommodates two screws 2. A dough-discharging outlet 4 is provided at the downstream end of the screw housing, and thus near the downstream ends of the screws. If desired, and depending on circumstances, it is possible to provide three or more screws by increasing the number of cylinders. Just one screw may also be sufficient.

The screw housing 3 forms the bottom of the hopper and itself has a bottom consisting of a number of bottom portions where are semicircular in lateral cross-section to conform to the peripheries of the screws 2.

In the hopper 1 a pusher roller 11 is located above the screw housing 3 and near the dough-discharging outlet 4. The pusher roller 11 is rotatable in the directions indicated by the arrows B, and has on its cylindrical surface grooves 12 to enhance frictional contact with the dough D, so that the roller can push the dough D in the hopper down into the screws as shown by an arrow A. The roller is located so that its axis is horizontal and at right angles to the axes of the screws.

At one end of the roller 11 a dough removing means in the form of a scraper 5 is mounted so as to extend away from the roller. The scraper 5 is closely spaced by a selected distance from the inner surface of the side wall 13 of the hopper. In this embodiment, this distance is 2mm. It is alternatively possible to position the scraper 5 in sliding contact with the hopper side wall 13.

A shaft 6 supports the roller and a crank disk 7 is mounted at one end of the shaft. The crank disk 7 is connected to one end of a crank rod 8 and the other end of the rod is connected to a crank shaft 9 connected to a motor 10. The rotation of the motor 10 is transmitted to the crank disk 7 through the crank shaft 9 and the crank rod 8 to pivot the crank disk 7, and due to this pivoting movement of the crank disk the roller 11 and the scraper 5 also pivot in reciprocating fashion as shown by arrows B and C.

The screws 2 are rotated at a desired speed by a screw driving unit 12 so that they discharge the supplied dough from the dough-discharging outlet 4.

The scraper 5 pivots as above described, whilst being spaced apart by a very small distance from the inner surface of the side wall 13. In this embodiment, as already mentioned, this distance is 2mm.

The dough D, when supplied to the hopper, tends to stick to the inner surfaces of the walls, thus bringing about the dough-bridging phenomenon as shown in the prior art apparatus of Figure 3. Namely, as shown, as gravity moves the dough in the direction of the arrows E, reaction forces are generated in the direction of the arrows F, causing the dough to stick to the inner surfaces of the hopper. But in the present apparatus, this phenomenon can be prevented by the pivoting movement of the scraper 5 along the inner surface of the hopper wall. As the dough is thus removed from the inner surface of the hopper wall, continuous discharge of the dough can be secured.

Although in this embodiment the scraper 5 is connected to one end of the roller, the scraper may be connected directly to the shaft 6, or to some other means, so as to be driven by the crank shaft 9. The roller 11 can also be rotated continuously in one direction by connecting it to a separate driving means (not shown).

Further, although in this embodiment only one scraper is used, on one side of the hopper, two scrapers can alternatively be provided, one for each inner surface of the respective side walls 13 and 14, to enhance the anti-bridging effect.

The anti-bridging effect is particularly notable when the distance between the side walls 13 and 14 is small, since if the distance is large the dough tends to move more readily down towards the screws under gravity.

As explained above, in the present apparatus, the cause of dough bridging, namely the tendency of the dough to stick to inner wall surfaces of the hopper, can be prevented by the dough-removing means, namely the scraper, that removes any dough that is sticking to the wall surfaces.

Thus, in this apparatus, as elastic or viscoelastic dough material can be supplied to the screws without the flow of materials being stopped, the dough can be stably discharged from the dough-discharging outlet by the screws.

## Claims

1. A dough-discharging apparatus including a hopper (1), at least one dough-feeding screw (2) provided at the bottom of the hopper, a dough-discharging outlet (4) located at the downstream end of the screw, and a scraper (5) for scraping dough from the inside of the hopper;
characterised in that the said scraper is mounted adjacent a planar side wall (13) of the hopper and is arranged to pivot to and fro adjacent this side wall, the pivotal point being positioned at the lower lateral part of this side wall, the length of the scraper (3) being substantially the same as the height of this side wall and more than half the width of this side wall.

2. A dough-discharging apparatus according to claim 1, characterised in that the scraper (5) is connected to a pusher roller (11) provided above the screw (2).

## Patentansprüche

1. Eine Teigausgabevorrichtung, die aufweist:
einen Behälter (1), wenigstens eine Teigzuführungsschnecke (2), die an dem Boden des Behälters vorgesehen ist; einen Teigausgabeauslaß (4), der an dem in Beförderungsrichtung unteren Ende der Schnecke angeordnet ist; und eine Schabereinrichtung (5) zum Abschaben von Teig von der Innenseite des Behälters;
**dadurch gekennzeichnet**,
daß die Schabeinrichtung neben einer ebenen oder ebenartigen Seitenwand (13) des Behälters angebracht und derartig angeordnet ist, daß sie sich zu dieser Seitenwand hin- und wegdreht bzw. wegschwenkt, wobei der Drehpunkt an dem unteren seitlichen Teil dieser Seitenwand angeordnet ist, wobei die Länge des Schabers (3) im wesentlichen die gleiche wie die Höhe der Seitenwand und mehr als die Hälfte der Breite dieser Seitenwand ist.

2. Eine Teigausgabevorrichtung nach Anspruch 1, dadurch gekennzeichnet, daß der Schaber (5) mit einer Schiebewalze (11) verbunden ist, die oberhalb der Schnecke (2) vorgesehen ist.

## Revendications

1. Appareil à décharger de la pâte, comprenant une trémie (1), au moins une vis (2) d'alimentation en pâte prévue au fond de la trémie, une sortie (4) de déchargement de pâte placée à l'extrémité d'aval de la vis, et une raclette (5) destinée à racler de la pâte de l'intérieur de la trémie ;
caractérisé en ce que ladite raclette est montée à proximité immédiate d'une paroi latérale plane (13) de la trémie et est agencée pour effectuer un mouvement de va-et-vient en pivotant à proximité immédiate de cette paroi latérale, le point de pivotement étant positionné à la partie latérale inférieure de cette paroi latérale, la longueur de la raclette (5) étant sensiblement égale à la hauteur de cette paroi latérale et supérieure à la moitié de la largeur de cette paroi latérale.

2. Appareil à décharger de la pâte selon la revendication 1, caractérisé en ce que la raclette (5) est reliée à un rouleau pousseur (11) prévu au-dessus de la vis (2).
